# FASCICULE DE BREVET EUROPEEN

(11) **EP 0 518 760 B1**
(45) Date de publication et mention de la délivrance du brevet: **04.01.1995**
(21) Numéro de dépôt: 92401609.0
(22) Date de dépôt: 10.06.1992
(51) Int. Cl.: B60S 1/52

(54) **Dispositif d'éjection de liquide de lave-glace monté sur un balai d'essuie-glace**
Auf einem Scheibenwischerblatt montierte Vorrichtung für Waschflüssigkeitsejektion
Device for ejection of washing-fluid mounted on a windscreen wiper blade

(30) Priorité: 11.06.1991 FR 9107051
(43) Date de publication de la demande: 16.12.1992
(73) Titulaire: VALEO SYSTEMES D'ESSUYAGE, 78180 Montigny-Le-Bretonneux (FR)
(72) Inventeur: Schon, Wilfrid, F-63580 St.Etienne/Usson (FR)
(74) Mandataire: Gamonal, Didier

(56) Documents cités:
- DE-A- 1 902 564
- DE-A- 2 942 086
- DE-A- 3 124 511
- DE-A- 3 907 980
- FR-A- 2 119 130
- GB-A- 1 603 589

## Description

L'invention concerne les installations de nettoyage de glaces, notamment pour véhicules automobiles.

De telles installations comprennent de façon classique un gicleur monté de façon fixe sur la carrosserie du véhicule au voisinage de la glace à nettoyer, par exemple sur le capot dans le cas d'un parebrise, et orienté vers la glace. Ce gicleur est relié par une tuyauterie souple à un réservoir de liquide de laveglace, le cas échéant avec interposition d'une pompe d'entraînement du liquide. Un essuie-glace comprenant un bras et un balai permet d'étaler sur la surface de la glace le liquide projeté par le gicleur.

L'inconvénient de ce système est que tout ou partie du jet de liquide peut être déviée, notamment par le vent, et ne pas atteindre la glace.

Pour éliminer cet inconvénient, on réalise des systèmes dans lesquels la tuyauterie d'alimentation en liquide est amenée le long du bras d'essuie-glace, son extrémité étant fixée au balai et orientée vers la glace de façon à former directement un jet de liquide de très faible longueur qui atteint à coup sûr la glace. Mais cette disposition est inesthétique, et nécessite en outre des opérations de montage particulières pour le positionnement correct de l'extrémité libre de la tuyauterie.

Il a été prévu dans le document GB-A-1 603 589 un dispositif d'éjection de liquide destiné à être fixé sur une monture à profil en U d'un balai d'essuie-glace et relié à un réservoir de liquide de lave-glace pour émettre un jet de liquide en direction d'une glace de véhicule, le dispositif comprenant un boîtier étanche propre à être monté sur le profil de la monture, ce boîtier comportant des moyens de coopération avec un axe de montage du bras d'essuie-glace, prévu sur la monture, des moyens de raccordement au réservoir de liquide et au moins un orifice d'éjection de liquide.

Ce dispositif présente de nombreux inconvénients car non seulement il est inesthétique mais aussi il se trouve devoir faire face à de nombreuses agressions telles que notamment projections de boues et son fonctionnement risque d'être gravement entravé.

Le but de l'invention est de remédier à ces inconvénients.

A cet effet, l'invention vise un dispositif d'éjection de liquide destiné à être fixé sur une monture à profil en U d'un balai d'essuie-glace et relié à un réservoir de liquide de lave-glace pour émettre un jet de liquide en direction d'une glace de véhicule, le dispositif comprenant un boîtier étanche propre à être monté sur le profil de la monture, ce boîtier comprenant des moyens de coopération avec un axe de montage d'un bras d'essuie-glace, ledit axe étant prévu sur la monture (16), des moyens de raccordement au réservoir de liquide et au moins un orifice d'éjection de liquide (Dispositif du type divulgué par GB-A-1 603 589), caractérisé en ce que le boîtier étanche est propre à se loger au moins partiellement dans le profil de la monture, ce boîtier comportant des moyens de coopération avec l'axe pour immobiliser ledit boîtier par rapport à ladite monture.

L'utilisation du dispositif selon l'invention est rendue possible notamment par la libération de l'espace interne de l'armature, autour de l'axe de montage du bras, lorsque cet axe est prolongé à l'extérieur de l'armature pour recevoir l'extrémité du bras comme décrit par exemple dans FR-A- 2 219 860.

Avantageusement, les moyens de coopération avec l'axe comprennent au moins une encoche définissant un logement pour l'axe et présentant un étranglement propre à retenir celui-ci dans ledit logement, les parois de l'encoche étant déformables élastiquement pour permettre l'introduction de l'axe dans le logement.

Le boîtier peut comporter en outre des moyens de coopération avec le profil de la monture pour l'immobiliser en rotation autour de l'axe.

Selon une forme de réalisation avantageuse, les moyens de raccordement comprennent une tubulure d'entrée sur laquelle peut s'engager un tuyau souple d'alimentation relié au réservoir.

Le boîtier est de préférence formé de deux pièces en matière plastique assemblées de façon étanche, a savoir un corps comportant les moyens de coopération avec l'axe et un couvercle placé du côté du corps opposé au fond de la monture, l'une au moins de ces deux pièces présentant un creux qui est recouvert par l'autre pièce pour former une cavité interne du boîtier définissant le trajet du liquide entre les moyens de raccordement et l'orifice d'éjection.

Ces deux pièces peuvent notamment présenter des creux respectifs qui viennent en regard l'un de l'autre pour former ladite cavité, et la tubulure d'entrée peut être formée pour moitié par chacune d'elles.

D'autres caractéristiques et avantages de l'invention ressortiront de la description détaillée donnée ci-après d'un exemple de réalisation, et des dessins annexés dans lesquels :
- la figure 1 est une vue de côté d'un dispositif selon l'invention, mis en place dans la monture d'un balai d'essuie-glace;
- la figure 2 est une vue de dessus de l'ensemble de la figure 1, montrant également le crochet d'un bras d'essuie- glace engagé sur l'axe d'articulation du balai; et

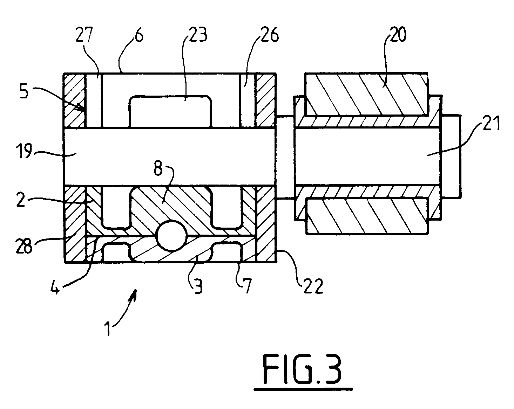

- la figure 3 est une vue en coupe selon la ligne III-III de la figure 2.

Le dispositif d'éjection de liquide illustré comprend un boîtier 1 formé de deux pièces en matière plastique, à savoir un corps 2 et un couvercle 3, assemblées par collage ou par soudage selon un plan de joint 4. Le boîtier 1 présente une paroi tubulaire cylindrique 5 dont la génératrice est perpendiculaire au plan de joint 4 et dont les bases, de forme complexe, sont contenues dans des plans 6 et 7 parallèles à ce dernier et situés de part et d'autre de celui- ci. Le boîtier comprend également un noyau 8 placé à l'intérieur de la paroi 5 et raccordé à celle-ci. Dans le noyau 8 est ménagée une cavité 9 présentant deux branches 10 et 11 dont les extrémités débouchent à l'extérieur du boîtier par des orifices respectifs 12 et 13 sur la face extérieure de la paroi 5, et une troisième branche 14 qui traverse la paroi 5 et se prolonge à l'extérieur de celle-ci dans un col tubulaire 15 du boîtier faisant saillie par rapport à la paroi 5, la branche 14 débouchant à l'extrémité du col 15.La cavité 9 et le col 15 sont symétriques par rapport au plan 4, la cavité étant formée par des creux ménagés dans les deux pièces 2 et 3 et le col étant formé pour moitié par chacune de celles-ci.

Dans la position d'utilisation montrée sur les figures, le boîtier 1 est partiellement logé dans le profil en U inversé de la monture 16 du balai d'essuie-glace, en regard d'une ouverture sensiblement rectangulaire 17 ménagée dans le fond 18 de ce profil, et s'étendant dans la direction longitudinale du balai de part et d'autre de l'axe 19 d'articulation de ce dernier. L'ouverture 17 est prévue pour permettre l'introduction du crochet du balai lorsque celui-ci doit recevoir la partie de l'axe 19 comprise à l'intérieur du profil de la monture. Cependant, dans le cas présent, le crochet 20 du balai entoure une portion 21 de l'axe faisant saillie hors de la monture au- delà de l'un 22 des côtés de celui-ci et le boîtier 1 est logé dans l'espace de l'ouverture 17 ainsi libéré en entourant partiellement la partie de l'axe 19.

Bien entendu et cela sans sortir du cadre de l'invention, il peut être prévu que l'ouverture 17 ne soit pas réalisée et de ce fait le fond 18 se continuera tout au long du profil de la monture.

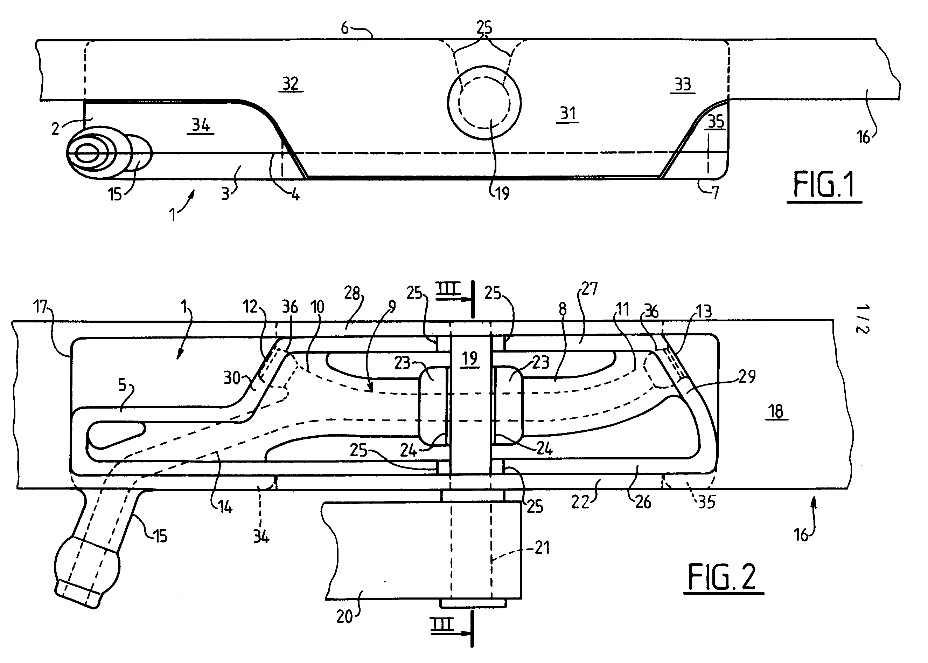

Le noyau 8 est situé essentiellement au-dessous de l'axe 19 et présente sur une région de son étendue longitudinale située au niveau de celui-ci une saillie 23 s'étendant vers le haut au-delà de l'axe et présentant une encoche 24 ouverte vers le haut pour recevoir celui-ci. De même, la paroi tubulaire 5 présente des encoches 25 ouvertes vers le haut pour recevoir l'axe 19. Dans le présent mémoire, sauf indications contraires, les termes "au-dessous" et "bas" signifient vers le pare-brise dans la position de fonctionnement de l'essuie-glace, c'est-à-dire à l'opposé du fond 18 par rapport au profil de la monture, et le terme "longitudinal" se réfère à la direction longitudinale du balai. Comme on le voit à la figure 1, les bords des encoches 24 et/ou 25 sont dessinés de façon à entourer étroitement l'axe 19 sur un peu plus de la moitié de sa circonférence, dans la région du fond des encoches, la largeur de celles-ci étant supérieure au diamètre de l'axe de leur extrémité supérieure ouverte jusqu'au voisinage des zones de contact. L'axe peutainsi être inséré facilement dans les encoches et immobilisé au fond de celles-ci par encliquetage réversible.

La paroi tubulaire 5 comprend deux portions planes 26 et 27 parallèles aux côtés longitudinaux 22 et 28 de la monture 16 et venant en appui respectivement sur les faces internes de ceux-ci pour immobiliser le boîtier 1 dans la direction transversale. La portion 26 s'étend sensiblement sur toute la longueur du boîtier 1, et la portion 27 s'étend sur une longueur inférieure. A cette portion 27 se raccordent deux portions obliques 29 et 30 de la paroi 5.

Les côtés longitudinaux 22 et 28 de la monture 16 présentent à partir du fond 18 une hauteur variable, maximale dans une région médiane 31 s'étendant longitudinalement de part et d'autre de l'axe 19, et diminuant progressivement dans des régions 32 et 33 situées longitudinalement de part et d'autre de la région 31, pour atteindre une valeur minimale sensiblement inférieure à la valeur maximale sur la majeure partie de la longueur de la monture. La hauteur du boîtier 1 coïncide sensiblement avec la hauteur maximale de la monture, la face extérieure du fond 18 et les bords inférieurs des côtés 22 et 28 dans la région 31 étant situés sensiblement dans les plans 6 et 7 respectivement. La portion 26 de la paroi 5 s'étend sur une longueur supérieure à celle de la portion 31 de la monture et présente sur sa face extérieure, de part et d'autre de la région 31 et au-dessous des régions 32 et 33 respectivement, des bossages 34 et 35 ayant un contour complémentaire de celui de l'aile 22 pour empêcher toute rotation du boîtier autour de l'axe 19.

Le col 15 du boîtier 1 est en saillie sur le bossage 34, au- dessous par conséquent de l'aile 22 de la monture. Il est prévu pour recevoir l'extrémité d'un tuyau souple non représenté relié à un réservoir de liquide de lave-glace par l'intermédiaire d'une pompe. Le col 15 présente un renflement pour retenir le tuyau. Le liquide arrivant par le tuyau remplit la cavité 9 et est éjecté par des buses non représentées, introduites par les orifices 12 et 13 et encliquetés dans des élargissements 36 de la cavité adjacents à ces ouvertures. Les deux jets ainsi formés, perpendiculaires aux portions de parois obliques 29 et 30, sont dirigés à l'opposé l'un de l'autre dans la direction longitudinale et tous deux du côté de l'aile 28 de la monture, au-dessous de laquelle ils passent dans les régions 32 et 33 respectivement pour atteindre le pare-brise.

## Revendications

1. Dispositif d'éjection de liquide destiné à être fixé sur une monture (16) à profil en U d'un balai d'essuie-glace et relié à un réservoir de liquide de lave-glace pour émettre un jet de liquide en direction d'une glace de véhicule, le dispositif comprenant un boîtier étanche (1) propre à être monté sur le profil de la monture (16), ce boîtier comprenant des moyens de coopération avec un axe (19) de montage d'un bras d'essuie-glace, ledit axe étant prévu sur la monture (16), des moyens de raccordement au réservoir de liquide et au moins un orifice (12,13) d'éjection de liquide, caractérisé en ce que le boîtier étanche (1) est propre à se loger au moins partiellement dans le profil de la monture (16), ce boîtier comportant des moyens (24,25) de coopération avec l'axe (19) pour immobiliser ledit boîtier par rapport à ladite monture.

2. Dispositif selon la revendication 1, caractérisé en ce que les moyens de coopération avec l'axe comprennent au moins une encoche (24,25) définissant un logement pour l'axe et présentant un étranglement propre à retenir celui-ci dans ledit logement, les parois de l'encoche étant déformables élastiquement pour permettre l'introduction de l'axe dans le logement.

3. Dispositif selon l'une des revendications 1 et 2, caractérisé en ce que le boîtier comporte en outre des moyens (34,35) de coopération avec le profil de la monture pour l'immobiliser en rotation autour de l'axe.

4. Dispositif selon l'une des revendications précédentes, caractérisé en ce que les moyens de raccordement comprennent une tubulure d'entrée sur laquelle peut s'engager un tuyau souple d'alimentation relié au réservoir.

5. Dispositif selon l'une des revendications précédentes, caractérisé en ce que le boîtier est formé de deux pièces en matière plastique assemblées de façon étanche, à savoir un corps (2) comportant les moyens de coopération avec l'axe et un couvercle (3) placé du côté du corps opposé au fond de la monture, l'une au moins de ces deux pièces présentant un creux qui est recouvert par l'autre pièce pour former une cavité interne (9) du boîtier définissant le trajet du liquide entre les moyens de raccordement et l'orifice d'éjection.

6. Dispositif selon la revendication 5, caractérisé en ce que les deux pièces présentent des creux respectifs qui viennent en regard l'un de l'autre pour former ladite cavité.

7. Dispositif selon la revendication 6, rattachée à la revendication 4, caractérisé en ce que la tubulure d'entrée est formée pour moitié par chacune de deux pièces.

## Claims

1. A device for ejecting liquid, adapted to be secured on a windscreen wiper blade mounting (16) having a U-shaped profile, and to be connected to a screen washing liquid reservoir so as to emit a jet of liquid towards a vehicle glass, the device comprising a sealed housing (1) adapted to be mounted on the profile of the mounting (16), the said housing including means for cooperating with a mounting pin (19) for a screen wiper arm, the said pin being arranged on the mounting (16), connecting means for connection to the liquid reservoir, and at least one liquid ejection orifice (12, 13), characterised in that the sealed housing (1) is arranged to be accommodated at least partially within the profile of the mounting (16), the housing having means (24, 25) for cooperation with the pin (19) so as to immobilise the said housing with respect to the said mounting.

2. A device according to Claim 1, characterised in that the means for cooperation with the pin comprise at least one groove (24, 25) defining a seating for the pin and having a throat for retaining the latter in the said seating, the walls of the groove being resiliently deformable so as to enable the pin to be introduced into the seating.

3. A device according to Claim 1 or Claim 2, characterised in that the housing further includes means (34, 35) for cooperation with the profile with the mounting so as to immobilise it against rotation about the pin.

4. A device according to one of the preceding Claims, characterised in that the connecting means comprise a tubular inlet element on which a flexible feed tube connected to the reservoir can be fitted.

5. A device according to one of the preceding Claims, characterised in that the housing is formed of two pieces of plastics material assembled sealingly together, namely a body (2) that includes the means for cooperation with the pin, and a cover (3) disposed on the side of the body opposite to the base of the mounting, with at least one of these two pieces having a recess which is covered by the other piece so as to define an internal cavity (9) of the housing, defining the path of the liquid between the connecting means and the ejection orifice.

6. A device according to Claim 5, characterised in that the two pieces have respective recesses which are in facing relationship with each other so as to define the said cavity.

7. A device according to Claim 6 when dependent on Claim 4, characterised in that each of two pieces defines one half of the tubular inlet element.

## Patentansprüche

1. Vorrichtung zum Verspritzen von Flüssigkeit, die für die Befestigung an einer Halterung (16) mit U-förmigem Profil eines Scheibenwischerblatts und den Anschluß an einen Scheibenwaschbehälter bestimmt ist, um einen Flüssigkeitsstrahl in Richtung einer Fahrzeugscheibe abzugeben, wobei diese Vorrichtung ein dichtes Gehäuse (1) enthält, das am Profil der Halterung (16) angebracht werden kann und das Mittel für das Zusammenwirken mit einem an der Halterung (16) vorgesehenen Montagebolzen (19) eines Scheibenwischerarms, Mittel für den Anschluß an den Scheibenwaschbehälter und mindestens eine Spritzöffnung (12, 13) umfaßt, **dadurch gekennzeichnet**, daß das dichte Gehäuse (1) zumindest teilweise im Profil der Halterung (16) aufgenommen werden kann, wobei dieses Gehäuse Mittel (24, 25) für das Zusammenwirken mit dem Bolzen (19) umfaßt, um das Gehäuse im Verhältnis zu der besagten Halterung zu sichern.

2. Vorrichtung nach Anspruch 1 , **dadurch gekennzeichnet,** daß die Mittel für das Zusammenwirken mit dem Bolzen mindestens einen Einschnitt (24, 25) enthalten, der eine Aufnahme für den Bolzen bildet und eine Verengung aufweist, um diesen in der besagten Aufnahme festzuhalten, wobei die Wände des Einschnitts elastisch verformbar sind, um die Einführung des Bolzens in die Aufnahme zu ermöglichen.

3. Vorrichtung nach einem der Ansprüche 1 und 2, **dadurch gekennzeichnet,** daß das Gehäuse außerdem Mittel (34, 35) für das Zusammenwirken mit dem Profil der Halterung umfaßt, um es gegen eine Drehung um den Bolzen zu sichern.

4. Vorrichtung nach einem der vorangehenden Ansprüche, **dadurch gekennzeichnet,** daß die Anschlußmittel einen Einlaufstutzen enthalten, an den ein mit dem Scheibenwaschbehälter verbundener Zuleitungsschlauch angeschlossen werden kann.

5. Vorrichtung nach einem der vorangehenden Ansprüche, **dadurch gekennzeichnet,** daß das Gehäuse aus zwei Kunststoffteilen besteht, die dicht zusammengefügt werden, und zwar aus einem Hauptteil (2), das die Mittel für das Zusammenwirken mit dem Bolzen umfaßt, und einem Deckel (3), der auf der Seite des Hauptteils angeordnet ist, die dem Boden der Halterung gegenüberliegt, wobei mindestens eines dieser beiden Teile eine Vertiefung aufweist, die durch das andere Teil überdeckt wird, um einen inneren Hohlraum (9) des Gehäuses zu formen, der den Durchgang der Flüssigkeit zwischen den Anschlußmitteln und der Spritzöffnung bildet.

6. Vorrichtung nach Anspruch 5 , **dadurch gekennzeichnet,** daß die beiden Teile entsprechende Vertiefungen aufweisen, die einander gegenüberliegen, um den besagten Hohlraum zu bilden.

7. Vorrichtung nach Anspruch 6 in Verbindung mit Anspruch 4, **dadurch gekennzeichnet**, daß der Einlaufstutzen jeweils zur Hälfte durch die beiden Teile gebildet wird.
